(19) Europäisches Patentamt
European Patent Office
Office européen des brevets

(11) **EP 1 847 952 A1**

(12) **EUROPEAN PATENT APPLICATION**

(43) Date of publication:
**24.10.2007 Bulletin 2007/43**

(51) Int Cl.:
**G06Q 30/00** *(2006.01)* **G06F 17/30** *(2006.01)*

(21) Application number: **06252173.7**

(22) Date of filing: **21.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Yahoo!, Inc.**
**Sunnyvale, CA 94089 (US)**

(72) Inventors:
• **Hearn, Lyndon**
**London SW19 1LR (GB)**
• **Jackson, Ben**
**West Midlands B91 2RG (GB)**
• **Bluett, Michael**
**London N8 8JA (GB)**

(74) Representative: **Palmer, Jonathan R.**
**Boult Wade Tennant,**
**Verulam Gardens,**
**70 Gray's Inn Road**
**London WC1X 8BT (GB)**

Remarks:
Amended claims in accordance with Rule 86 (2) EPC.

(54) **Searching method and apparatus**

(57) A method of searching a data store, the data store storing a plurality of offers, each offer comprising information about a corresponding product and a corresponding seller for that offer, the method comprising the steps of: receiving, from each of a plurality of sellers, one or more offers; storing the offers received from the plurality of sellers in the data store; and filtering the stored offers by: receiving one or more filter metrics, each filter metric defining a corresponding filter; and identifying one or more of the stored offers that satisfy each filter condition.

Figure 5

## Description

This invention relates to searching. In particular, this invention relates to a method, apparatus and computer program for searching.

It is known for a seller of products to provide a search system with which a user may search for the products being sold by that seller. Typically, this involves a website hosted by the seller with which a user may interact. The website typically has a number of links to different parts of the website that relate to the various products being sold by the seller. The website may also allow the user to enter the name or product code of a product to search for parts of the website that have information about that product.

It is also known for a search website to provide information about a number of different products that may be sold by different sellers. However, the searching mechanisms provided by these websites are often restricted. This is particularly true when a user wishes to search for deals (offered by sellers) that he/she considers to be "good" deals. The notion of a "good" deal is often a user-specific notion that current search engines are not well equipped to handle. Rather than simply searching for a particular product or for a particular seller of a product (as per current searching systems), the user may wish to perform more complex searching that allows the user-specific good deals to be identified.

It is an object of the present invention to provide a searching method that allows a user to easily and quickly search for deals that that user considers to be "good" deals, i.e. preferable to those that the user would not consider to be "good" deals.

## Summary of the invention

According to a first aspect of the invention, there is provided a method according to claim 1. According to a second aspect of the invention, there is provided a method according to claim 36.

Embodiments of the invention allow a user to use a search system to identify one or more offers (or deals) provided by a seller and relating to a product being sold by that seller. The search system may identify good deals for the user. To do this, one or more filter conditions are established and the offers are filtered according to these filter conditions to identify offers for the user.

In embodiments of the invention, the user may specify or determine these filter conditions so that the user may control what is considered to be a good deal. This may be achieved by providing one or more filter metrics (such as how new a deal is, how differently priced a deal is compared to other deals, how popular the deal appears to be based on other users' actions, etc.) These filter metrics form the filter conditions that are used to filter the offers. The filter conditions established in this way provide a versatile way of searching the offers in order to find deals that a user would consider to be "good".

Furthermore, in embodiments of the invention, the deals (or offers) originate from sellers, there being a plurality of sellers. Information about these offers is collated and stored in a central search system that can be used to perform the searching. In this way, a comparison across different sellers may be performed, the comparison being based on the filter conditions that have been established.

According to a third and fourth aspect of the invention, there is provided an apparatus according to claim 37 and 38.

According to a fifth aspect of the invention, there is provided a computer program according to claim 39. The computer program may be carried on a storage medium or a transmission medium.

## Brief description of the drawings

Embodiments of the invention will now be described, by way of example only, with reference to the accompanying drawings, in which:

Figure 1 schematically illustrates an embodiment of the invention;
Figure 2 schematically illustrates a search system according to an embodiment of the invention;
Figure 3 schematically illustrates a record in an offer-searching database;
Figure 4 schematically illustrates a record in a product-searching database;
Figure 5 is a flowchart illustrating an overview of a searching process performed by the search system illustrated in Figure 2; and
Figures 6-9 are illustrations of interfaces provided to a user according to embodiments of the invention.

## Description of the invention

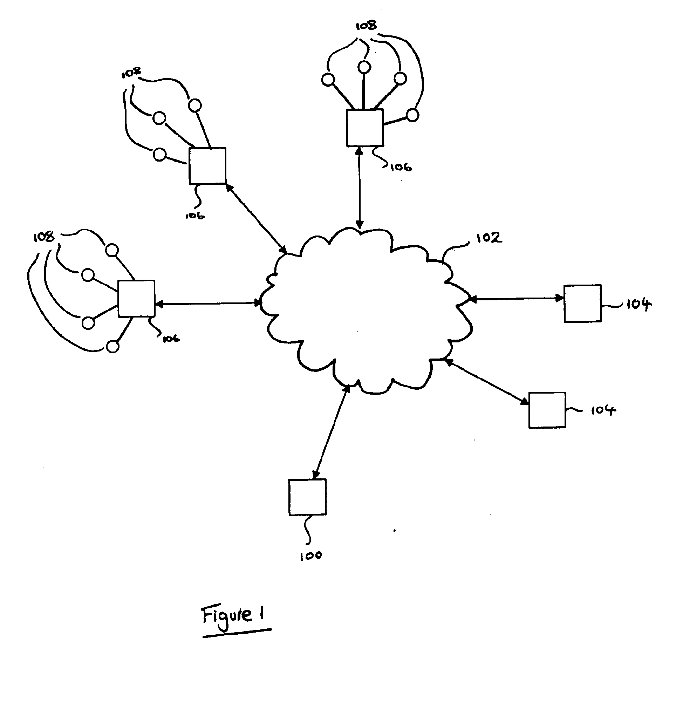

Figure 1 schematically illustrates an embodiment of the invention. A search system 100 according to an embodiment of the invention is connected to the Internet 102. A number of users 104 are also connected to the Internet 102, for example, via personal computers. Additionally, a number of sellers 106 are connected to the Internet 102, for example, via server computers. The term "seller" is taken to include, amongst other things, a merchant of a product, a third party selling a product on behalf of a current owner of the product and an advertiser advertising a product for sale. Products being sold by/through the sellers 106 are shown in Figure 1 as products 108. The products 108 may be products and/or services.

Each of the sellers 106 supplies the search system 100 with information about the products 108 that that seller 106 is selling. For each of the products 108 being sold by a seller 106, this information may include, for example, information about the price at which the product 108 is being sold, details of any special offers provided by the seller 106 (such as guarantees, warranties, etc.), availability of the product 108 and delivery details of the product 108 (such as time and cost). However, it will be appreciated that a seller 106 may provide other information to the search system 100 about the products 108 that it is selling. The information about a product 108 being sold by a seller 106 that is provided to the search system 100 makes up an "offer" from that seller 106 for that product 108. The offers are received by the search system 100 from the seller 106 via the Internet 102.

The users 104 may then interact with the search system 100 via the Internet 102 to search for: a desired product 108, a desired seller 106, a desired offer, or other information. This will be described in more detail below.

The sellers 106 may provide the search system 100 with their offers at various points in time. However, according to an embodiment of the invention, each of the sellers 106 provides the search system 100 with their offers on a daily basis so that that search system 100 also updates some of its records on a daily basis. This will be described in more detail below.

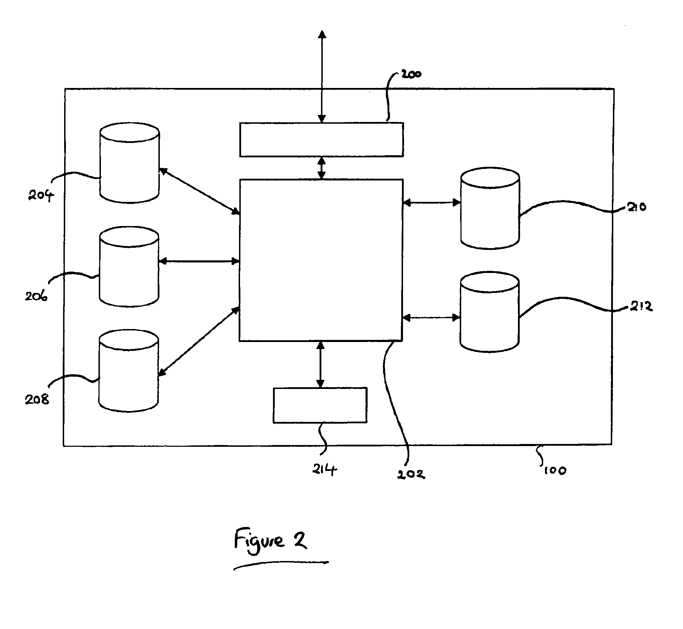

Figure 2 schematically illustrates the search system 100 according to an embodiment of the invention.

The search system 100 has an interface 200 for receiving data from and transmitting data to the Internet 102. The interface 200 is connected to a processor 202 that makes use of an offers database 204, a sellers database 206, a products database 208, an offer-searching database 210 and a product-searching database 212. Additionally, the processor 202 may receive input from an operator of the search system 100 via a user interface 214.

The interface 200 receives offers from the sellers 106 and the processor 202 then updates one or more of the databases according to the received offers. The interface 200 also receives a search request from a user 104 and the processor 202 performs a search according to the search request. The processor 202 then outputs the results of the search to the user 104 via the **interface 200 and the Internet 102.**

The user interface 214 may comprise any appropriate input and output means for receiving input from and outputting information to an operator of the search system 100. For example, the user interface 214 may comprise a mouse, a keyboard and a monitor (not shown).

The products database 208 stores records with information about the various products 108. Some of these records may correspond to products 108 that are being (or used to be) sold by one or more of the sellers 106. However, some of these records may relate to products 108 that none of the sellers 106 are selling (or have ever sold). Each of the records in the products database 208 corresponds to a different product 108 and has a corresponding unique *product_id* field that uniquely identifies that record (and therefore the corresponding product 108) within the products database 208. Each of the records in the products database 208 may store information about the corresponding product 108, such as make, model, manufacturer, colour, special features, a description, etc.

The sellers database 206 stores information about the various sellers 106 that sell (or used to sell) one or more products 108. Each of the records in the sellers database 206 corresponds to a different seller 106 and has a corresponding unique *seller_id* field that uniquely identifies that record (and therefore the corresponding seller 106) within the sellers database 206. Each of the records in the sellers database 206 may store information about the corresponding seller 106, such as name, address, telephone numbers, etc.

The offers database 204 stores information about the various offers received by the search system 100 from the sellers 106. Each of the records in the offers database 204 corresponds to a different offer that has been received by the search system 100 and has a corresponding unique *offer_id* field that uniquely identifies that record (and hence the corresponding offer) within the offers database 204. A record in the offers database 204 may have a *product_id* field. This can be used to identify a record in the products database 208 having a matching value for its *product_id* (if any such matching record exists). In this way, an offer (represented by a record in the offers database 204) may be linked to the product 108 (represented by a record in the products database 208) to which that offer relates. A record in the offers database 204 may have a *seller_id* field. This can be used to identify a record in the sellers database 206 having a matching value for its *seller_id* (if any such matching record exists). In this way, an offer (represented by a record in the offers database 204) may be linked to the seller 106 (represented by a record in the sellers database 206) that supplied that offer to the search system 100. Each record in the offers database 204 may store other information about its corresponding offer, such as delivery details (time and cost), pricing information, guarantees, warranties, etc.

The *offer_id* field of a record in the offers database 204 may be determined in a variety of ways. For example, the *offer_id* field may be determined based on the corresponding *seller_id* for that particular offer together with the model name and manufacturer of the corresponding product 108. In this way, if a seller 106 repeats an earlier dated offer, then the corresponding *offer_id* generated for the repeat offer will be the same as the *offer_id* for the earlier offer.

The offer-searching database 210 and the product-searching database 212 are used by the search system 100 to perform certain searches at the request of a user 104. The details of these two databases will be described later.

It will be appreciated that the search system 100 may be run on a single computer or more than one computer and may use a single processor 202 or multiple processors 202. Additionally, the databases used by the search system 100 may take many forms to store the information about the offers, the sellers 106 and the products 108 and embodiments of the invention may make use of a single database or multiple databases accordingly and may merge one or more of the databases. Furthermore, the databases used may be stored locally to the search system 100 or may be remote from the search system 100 and accessed via a communications link (not shown).

The offers supplied by a seller 106 to the search system 100 may be in a standard default format used by the search system 100. Alternatively, the offers supplied by a seller 106 to the search system 100 may be in an alternative format used by that seller 106. In this case, the search system 100 may have to perform a degree of format conversion before it can interpret the offers supplied by the seller 106. This may be an automatic process. Alternatively, this may be performed by (or assisted by) an operator of the search system 100 via the user interface 214.

The search system 100 performs an update process to update its databases according to the offers that it has received. This may be performed by the processor 202. In particular, the search system 100 updates the offers database 204 (and potentially also the sellers database 206 and the products database 208 if appropriate) as and when offers are actually received from the sellers 106. However, the search system 100 also performs a periodic update process for updating the offer-searching database 210 and the product-searching database 212. The offers that the search system 100 has received since the time that it last performed this periodic update process shall be referred to as the "most recently received offers".

In the embodiment described herein, the periodic update process is performed by the search system 100 once a day, although it will be appreciated that other time intervals (regular or irregular) may be used instead (such as hourly updates, weekly updates, etc.) Additionally, in other embodiments the search system 100 may not perform this update periodically, but may, instead, perform it at more irregular points in time (potentially initiated by an operator of the search system 100). Furthermore, the search system 100 may update the offers database 204 and/or the sellers database 206 and/or the products database 208 periodically (such as daily or hourly) and may therefore have a buffer to store offers (or other information) until these databases are next updated.

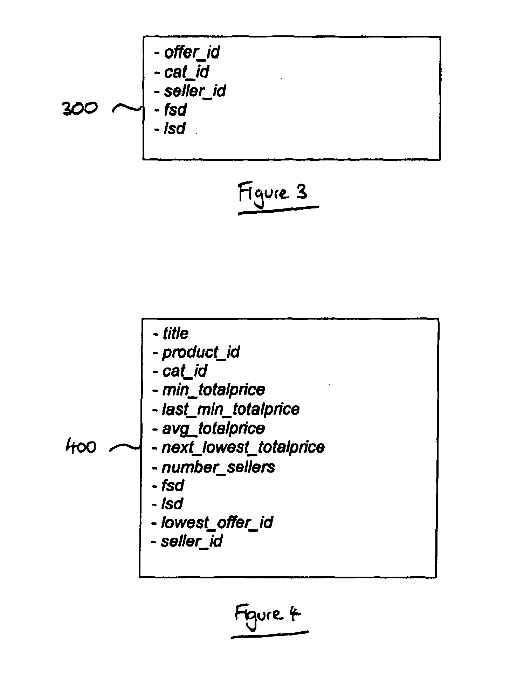

When the search system 100 receives one or more offers from a seller 106, it may replace one or more of the records in the offers database 204 with new records, these new records corresponding to the offers that have been received by the search system 100. For example, if the search system 100 has received offers from a particular seller 106, then the records in the offers database 204 corresponding to that seller 106 may be replaced by new records detailing the offers that that seller 106 has just informed the search system 100 about. The offer-searching database 210 is also updated to reflect the offers received from the seller 106 - this will be described in more detail with reference to Figure 3.

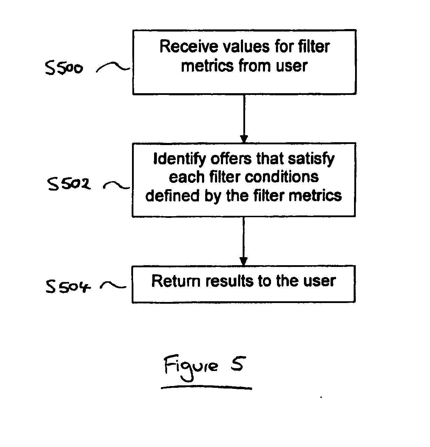

Additionally, for each new record in the offers database 204, the processor 202 attempts to find a corresponding record in the products database 208 that relates to the product 108 for that offer. This may be performed automatically or may require a degree of input from an operator of the search system 100 via the user interface 214. If a record in the products database 208 is found for that product 108, then the newly-generated record in the offers database 204 is linked to that record in the products database 208 by the corresponding *product_id* fields. The product-searching database 212 is also updated to reflect the products 108 of offers received from the sellers 106 - this will be described in more detail with reference to Figure 4.

The data provided by a seller 106 to the search system 100 to describe its offers may be a complete description of all of the current offers provided by that seller 106. However, it will be appreciated that the seller 106 could provide difference data to the search system 100 that identifies the differences between the current offers of the seller 106 and the offers being stored in the offers database 106, the search system 100 then being able to determine from this information what constitutes the current offers of the seller 106.

Figure 3 schematically illustrates a record 300 in the offer-searching database 210. It will be appreciated that fields other than the fields shown in Figure 3 may make up the record 300.

Each record 300 in the offer-searching database 210 corresponds to an offer that has been received by the search system 100 at some point in time (although that offer may no longer be current). Therefore, the record 300 has an *offer_id* field. This is generated in the same was as the *offer_id* field of the records in the offers database 204. If the corresponding offer is represented by a record in the offers database 204 then the *offer_id* of the record 300 will match the *offer_id* of this corresponding record in the offers database 204. In this way the record 300 can be linked to a corresponding record in the offers database 204 so that more information about the corresponding offer can be retrieved from the offers database 204 if required.

The record 300 also has a *cat_id* field that identifies a category for the product 108 to which this record 300 relates. The search system 100 may make use of a number of categories to group the products 108, such as a digital camera category, a used car category and a mobile phone category. If the product 108 to which this record 300 relates falls within one of these categories, then this category is represented in the *cat_id* field; otherwise, the *cat_id* field stores a value indicating that no category has been assigned to the record 300.

The record 300 also has a *seller_id* field that uniquely identifies the seller 106 for the offer corresponding to this record 300. This *seller_id* field matches the *seller_id* field of the record in the sellers database 206 for that seller 106. In this way, the record 300 can be linked to a corresponding record in the sellers database 206 so that more information about the corresponding seller 106 can be retrieved from the sellers database 206 if required.

The record 300 also has a *fsd* field that represents the date on which the corresponding offer was first "seen" (or received) by the search system 100. This field is set to the date when the record 300 was generated during the update process performed by the search system 100.

The record 300 also has a *lsd* field that represents the date on which the corresponding offer was last "seen" (or received) by the search system 100.

When an offer is received by the search system 100, the search system 100 determines the *offer_id* for that offer. During the periodic update process for the offer-searching database 210, for each record in the offers database 204 the search system 100 checks whether there is a record 300 in the offer-searching database 210 with a corresponding *offer_id.* If there is no such record 300, then the search system 100 creates a new record 300 in the offer-searching database 210 and sets the *fsd* field (and *lsd* field) to the current date. If, however, there is a matching record 300 then the search system 100 updates the *lsd* field of that record 300 to the current date.

Figure 4 schematically illustrates a record 400 in the product-searching database 212. It will be appreciated that fields other than the fields shown in Figure 4 may make up the record 400.

Each record 400 in the product-searching database 212 corresponds to a product for which there has, at some point, been a record in the products database 208. Therefore, the record 400 has a *product_id* field. In this way the record 400 can be linked to the corresponding record in the products database 208, if one exists, so that more information about the corresponding product 108 can be retrieved from the products database 208 if required.

The record 400 also has a *title* field that stores textual data describing the corresponding product 108, such as its brand name, model number, features, etc.

The record 400 also has a *cat_id* field that identifies a category for the corresponding product 108. This has the same purpose as the *cat_id* field used for the record 300 in the offer-searching database 210.

The record 400 also has a *min_totalprice* field that represents the lowest price of the most recently received offers for the corresponding product 108. During the update process, the search system 100 identifies a lowest offer (or lowest priced offer) for the corresponding product 108, this being the offer out of the most recently received offers that has the lowest price for the corresponding product 108. The search system 100 then sets the *min_totalprice* field according to the price of this lowest offer.

Related to the *min_totalprice* field are a number of other fields in the record 400. At the same time as updating the *min_totalprice* field, the search system 100 stores the current (i.e. about to be replaced) value for the *min_totalprice* field in a *last_min_totalprice* field of the record 400. Additionally, the search system 100 sets the value of a *lowest_offer_id* field of the record 400 to the *offer_id* for the lowest offer for the corresponding product 108. Futhermore, the search system 100 sets the value of a *seller_id* field of the record 400 to the *seller_id* for the lowest offer for the corresponding product 108.

The record 400 also has a *next_lowest_totalprice* field that represents the second lowest price for the corresponding product 108 from the most recently received offers. During the update process, the search system 100 identifies, from all of the most recently received offers for the corresponding product 108, which of these most recently received offers has the second lowest price for the corresponding product 108 and sets the *next_lowest_totalprice* field accordingly.

The record 400 also has an *avg_totalprice* field that represents the average of all of the prices for the corresponding product 108 from the most recently received offers. During the update process, the search system 100 identifies all of the most recently received offers for the corresponding product 108 and calculates the average of their respective prices. In one embodiment of the invention, the average is taken over all of the most recently received offers for the corresponding product 108; in another embodiment of the invention, the average is taken over all of the most recently received offers for the corresponding product 108 except for the lowest offer for the corresponding product 108.

The record 400 also has a *number_sellers* field that represents the number of distinct sellers 106 that have supplied a most recently received offer for the corresponding product 108 to the search system 100. The *number_sellers* field of the record 400 is updated by the search system 100 during the update process according to the number of sellers 106 that have supplied a most recently received offer related to that product 108.

The record 400 also has a *fsd* field that represents the date on which the search system 100 first received an offer for the corresponding product 108.

The record 400 also has a *lsd* field that represents the date on which the search system 100 last received an offer for the corresponding product 108.

As mentioned above, when an offer is received by the search system 100, the search system 100 attempts to match that offer with one of the records in the product database 208. If a match is found, then the record for that offer in the offers database 204 has its *product_id* field set accordingly. During the periodic update process for the product-searching database 212, for each record in the offers database 204 that has been matched to a record in the product database 208, the search system 100 checks whether there is a record 400 in the product-searching database 212 with a corresponding *product_id*. If there is no such record 400, then the search system 100 creates a new record 400 in the product-searching database 212 and sets the *fsd* (and *lsd*) field to the current date. If, however, there is a matching record 400 then the search system 100 updates the *lsd* field of that record 400 to the current date.

As mentioned above, some the fields of the record 400 relate to prices of an offer. In some embodiments of the invention, the price value used for these fields during the update process is the sum of (i) the price of sale of the corresponding product 108 by the corresponding seller 106 and (ii) any delivery costs that would be charged by the seller 106 for delivery of the product 108 to a user 104 who has purchased the product 108. However, it will be appreciated that one or more of these fields may make use of other price values, such as simply the price of sale of the corresponding product 108 by the corresponding seller 106.

In an embodiment of the invention, the search system 100 provides the user 104 with access to one or more offer web-pages accessible over the Internet 102. These offer web-pages may be hosted by the search system 100 or the sellers 106. Each of the offer web-pages may provide information relating to a corresponding offer, such as the information stored for an offer in the offers database 104 and the offer-searching database 110. For example, the results of a search performed by the search system 100 may be presented to a user 104 as a list of links to the corresponding offer web-pages. The search system 100 monitors the access to these offer web-pages by the users 104 and stores historical access data accordingly. For example, the search system may detect and count the number of times a link from a results list is selected by a user 104. This historical access data for an offer (or for an offer web-page) may be stored within the record 300 corresponding to that offer in the offer-searching database 120, as described below.

For example, the search system 100 may store, as historical access data, the number of times a particular offer web-page has been accessed on each day during the last 90 days. This information may be stored as *day_access [i]* fields in the record 300 for the corresponding offer in the offer-searching database 210, where the index *i* runs from 0 to 90. The search system 100 may then determine the value of an *access_amount* field of that record 300, this being determined as a weighted sum of the *day_access[i]* fields.

As an example, the search system 100 may use the *day_access[i]* fields to determine, for an offer, the number of times that offer's offer web-page has been accessed by any one of the users 104 during (i) the last 2 days; (ii) the last 7 days; (iii) the last 30 days and (iv) the last 90 days. In particular, the number of times that offer's offer web-page has been accessed by any of the users 104 during the last *n* days may be determined as

$$access[n] = \sum_{i=0}^{n} day\_access[i]$$ . The *access_amount* field for that offer may then be a weighted sum of *access[2], access[7], access[30],* and *access[90],* using respective weighting values of 0.3, 0.3, 0.25 and 0.15. It will be appreciated that other weights, other time periods and other numbers of time periods and weights may be used.

The *access_amount* field corresponding to an offer may be determined dynamically each time a user 104 accesses that offer's offer web-page. Alternatively, the *access_amount* field corresponding to an offer may be determined during the update process performed by the search system 100.

Additionally, the search system 100 may maintain, in each record 400 for a product 108 in the product-searching database 112, a *highest_access_amount* field, this having the value of the highest *access_amount* of all the records 300 in the offer-searching database 110 for that product 108. The search system 100 may also maintain in each record 400 for a product 108 in the product-searching database 112, a *most_accessed_offer_id* field that identifies the record 300 for that product 108 in the offer-searching database 110 that has the highest *access_amount*. Finally, the search system 100 may maintain, in each record 400 for a product 108 in the product-searching database 112, a *next_highest_access_amount* field, this having the value of the second highest *access_amount* of all the records 300 in the offer-searching database 110 for that product 108.

Furthermore, the search system 100 may maintain, in each record 400 for a product 108 in the product-searching database 112, an *average_access_amount* field, this having the average value of the *access_amount* fields of all the records 300 in the offer-searching database 110 for that product 108. Alternatively, this may have the average value of the *access_amount* fields of all the records 300 in the offer-searching database 110 for that product 108, except for the record 300 represented by the *most_accessed_offier_id* field.

Again, the *highest_access_amount* fields, the *most_accessed_offer_id* fields, the *next_highest_access_amount* fields and the *average_access_amount* fields of the records 400 in the product-searching database 400 may be determined dynamically each time a user 104 accesses an offer's offer web-page. Alternatively, these fields may be determined during the update process performed by the search system 100.

It will be appreciated that the number of distinct offers received by the search system 100 may be very large, such as 200000 per day. Additionally, there may be a very large number of distinct products 108 to which these offer relate. For example, the product database 208 may store over 150000 records, although the most recently received offers may relate to only a "current" subset of these products 108. There may also be a large number of categories used to describe the different products 108.

In some embodiments of the invention, the search system 100 provides the users 104 with a user interface. This may be a graphical user interface, such as a web-page, with which to interact, for example over the Internet 102. Through this user interface, the user 104 may (i) request that the search system 100 performs a search and (ii) receive the results of the search performed by the search system 100.

Figure 5 is a flowchart illustrating an overview of a searching process performed by the search system 100 according to an embodiment of the invention. The searching process is performed on the offers that have been received by the search system 100 from the various sellers 106 and stored in the various databases as described above.

Due to the large amount of data stored in the databases of the search system 100, the searching method performed by the search system 100 involves a filtering process. This filtering process uses one or more filter metrics, which will be described in more detail later. Therefore, at a step S500 of Figure 5, a value of (or indication for) some these filter metrics are provided by a user 104 to specify the particular filtering that the search system 100 is to perform. Each filter metric defines a filter condition that an offer may or may not satisfy, depending on the value (or indication) provided by the user 104 for that filter metric. In this way, the user 104 may discriminate between the offers. The user 104 decides and supplies values for one or more of the filter metrics, so that an offer satisfying each of the corresponding filter conditions is deemed by the user 104 as a "good" offer, i.e. preferable to an offer that does not satisfy each of the filter conditions that have been defined.

At a step S502, the search system 100 identifies which of the offers satisfy each of the filter conditions that the user 104 has defined.

At a step S504, the search system 100 provides the user 104 with an indication of the offers that satisfy each of the filter conditions that the user 104 has defined (for example, by displaying a list of these offers on a web-page).

There are several filter metrics and associated filter conditions that may be controlled by the user 104, and each may be used on its own or in combination with one or more of the others.


**1 - Filtering for relatively recent offers**

In one embodiment of the invention, one of the filter metrics used defines a period of time. An offer satisfies the filter condition corresponding to this filter metric if that offer is relatively new, i.e. if it was first received by the search system 100 within the period of time specified by the user 104 via that filter metric.

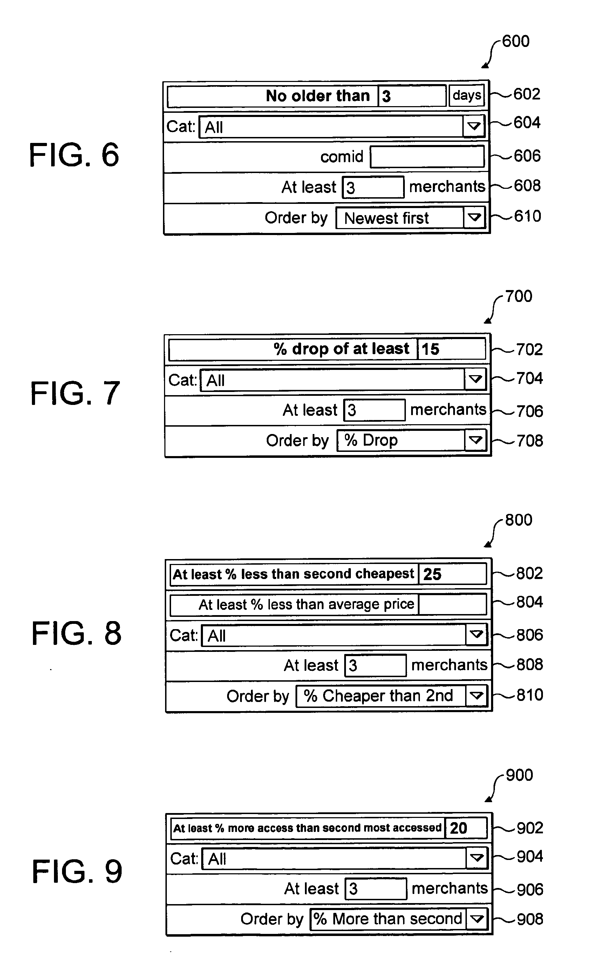

Figure 6 is an illustration of an interface 600 provided to a user 104 according to this embodiment. The interface 600 provides the user 104 with a time period input 602 for inputting the filter metric. In the example shown in Figure 6, the units of time are days, although it will be appreciated that other units of time may be used and could actually be specified by the user 104. As shown in Figure 6, the user 104 is requesting that the search system 100 search for offers by filtering the offers to find only those offers that were first received by the search system 100 at most 3 days ago (i.e. at most 3 days before the current date).

In order to perform this filtering, the search system 100, at the step S502 shown in Figure 5, searches the offer-searching database 210 for records 300 whose *fsd* indicates a date within the period of time indicated by the user, i.e. the search system 100 compares the *fsd* of that record 300 with the beginning of the time period indicated by the user 104 at the time period input 602 to determine whether the *fsd* of that record 300 is after the beginning of the period of time indicated by the user 104. For the example shown in Figure 6 in which the time period is indicated by a length of time, the beginning of the time period is the date occurring that length of time before the current date. In the example shown in Figure 6, the beginning of the period of time is 3 days before the current date.

The time period input 602 may allow the user 104 to indicate an actual date as the beginning of the period of time, rather than indicating a time period, with the search system 100 then searching for records 300 in the offer-searching database 210 that have an *fsd* later than the date specified by the user 104.

The interface 600 also allows the user 104 to provide values for other filter metrics, although these are purely optional. In addition to checking whether an offer satisfies the filter condition described above, the search system 100 will check whether an offer satisfies the filter conditions defined by any of these other optional filter metrics which have been specified by the user 104.

In particular, the interface 600 provides the user 104 with a category input 604, the corresponding filter metric being a category for the products 108. An offer satisfies the filter condition corresponding to this filter metric if that offer is for a product 108 which belongs to the category indicated by the user 104 at the category input 604. In Figure 6, the category input 604 is a drop-down list of available categories used by the search system 100 for the various products 108.

In order to perform the filtering using the filter metric input by the user 104 at the category input 604, the search system 100, at the step S502 shown in Figure 5, compares the *cat_id* of a record 300 in the offer-searching database 210 with the category indicated by the user 104 to find those records 300 with a *cat_id* that matches the category indicated by the user 104.

Additionally, the interface 600 provides the user 104 with a seller input 606, the corresponding filter metric being an indication of a seller 106. An offer satisfies the filter condition corresponding to this filter metric if that offer was supplied by a seller 106 matching the indication provided by the user 104 at the seller input 606. In Figure 6, the seller input 606 allows the user 104 to input an identification number for their desired seller 106.

In order to perform the filtering using the filter metric input by the user at the seller input 606, the search system 100, at the step S502 shown in Figure 5, compares the *seller_id* of a record 300 in the offer-searching database 210 with the seller indicated by the user 104 to find those records 300 with a *seller id* that matches the seller indicated by the user 104.

It will be appreciated that the seller input 606 may allow the user 104 to provide a textual input for the desired seller 106, such as the name of the desired seller 106. In this case, to perform the filtering using the filter metric input by the user at the seller input 606, the search system 100, at the step S502 shown in Figure 5, (i) identifies a record in the seller database 206 that has data indicating a name matching the input provided by the user at the seller input 606, (ii) determines the *seller_id* from this record in the seller database 206 and then (iii) searches the offer-searching database 210 for records 300 whose *seller_id* matches the *seller_id* of the record from the seller database 206.

Additionally, the interface 600 provides the user 104 with a seller-count input 608, the corresponding filter metric being an indication of a number of sellers 106. An offer satisfies the filter condition corresponding to this filter metric if, for the product 108 of the offer, the number of sellers 106 selling that product 108 is at least the number indicated by the user at the seller-count input 608. In Figure 6, the seller-count input 608 allows the user 104 to input a number for their desired number of sellers 106.

In order to perform the filtering using the filter metric input by the user at the seller-count input 608, at the step S502 shown in Figure 5, the search system 100 ascertains, for a given offer, the *number_seller* of the record 400 in the product-searching database 212 for the product 108 for that offer. The search system 100 then compares this *number_seller* with the number indicated by the user 104 at the seller-count input 608.

When the results of the search are presented to the user 104, the user 104 may wish for the results to be listed in a particular way. Therefore, the interface 600 has an ordering input 610 that allows the user 104 to select how the results are to be ordered in the presented list. In some embodiments of the invention, the ordering input 610 allows the user 104 to select one or more of the filter metrics by which to order the results. For example, the ordering input 610 may allow the results to be ordered according to: increasing or decreasing values for the *fsd* field of the offers and/or increasing or decreases values of the *number_sellers* field for results found. Additionally (or alternatively), the ordering input 610 may allow the results to be grouped (or ordered) according to the *seller_id* field and/or the *cat_id* field of the offers in the results. However, it will be appreciated that other grouping/ordering is possible.

## 2 - Filtering for relatively recent products

In one embodiment of the invention, one of the filter metrics used defines a period of time. An offer satisfies the filter condition corresponding to this filter metric if the corresponding product 108 for that offer is relatively new, i.e. if the first offer for that product 108 was seen/received by the search system 100 within the period of time specified by the user 104.

The interface 600 shown in Figure 6 (and described in relation to the first embodiment described above) may also be used for this embodiment of the invention and would function in a similar manner. However, for this embodiment, the time period input 602 is used to specify a period of time relating to when, for a product 108, the first offer for that product 108 was seen/received by the search system 100 (rather than when any given offer was first received by the search system 100). Therefore, for this embodiment, the illustration shown in Figure 6 shows that the user 104 is requesting that the search system 100 searches for offers by filtering the offers to find only those offers that have a product 108 which was first seen/received by the search system 100 at most 3 days ago (i.e. at most 3 days before the current date).

In order to perform this filtering, the search system 100, at the step S502 shown in Figure 5, searches the product-searching database 212 for records 400 whose *fsd* indicates a date within the period of time indicated by the user, i.e. the search system 100 compares the *fsd* of that record 400 with the beginning of the time period indicated by the user 104 at the time period input 602 to determine whether the *fsd* of that record 400 is after the beginning of the period of time indicated by the user 104. For the example shown in Figure 6 in which the time period is indicated by a length of time, the beginning of the time period is the date occurring that length of time before the current date. In the example shown in Figure 6, the beginning of the period of time is 3 days before the current date.

The time period input 602 may allow the user 104 to indicate an actual date as the beginning of the period of time, rather than indicating a time period, with the search system 100 then searching for records 400 in the product-searching database 212 that have an *fsd* later than the date specified by the user 104.

Having identified one or more appropriate products 108 with records 400 in the product-searching database 212, the search system 100 may then search the offers database 104 for offers that relate to any of these products 108 that have been identified.

**3 - Filtering based on price changes**

In one embodiment of the invention, one of the filter metrics used defines a price differential value. An offer for a product 108 satisfies the filter condition corresponding to this filter metric if the difference between the current lowest price out of all of the offers for that product 108 and a previous lowest price for that same product 108 exceeds the differential value.

Figure 7 is an illustration of an interface 700 provided to a user 104 according to this embodiment. The interface 700 provides the user 104 with a price differential input 702. In the example shown in Figure 7, the user 104 supplies a percentage to specify the price differential making up the filter metric. However, it will be appreciated that in other embodiments of the invention, the interface 700 may provide a price differential input 702 that receives an absolute value for the price differential making up the filter metric. However, in the current embodiment, as shown in Figure 7, the user 104 is requesting that the search system 100 search for offers by filtering the offers to find only products 108 for which the corresponding price has decreased by at least 15%.

In order to perform this filtering, at the step S502 shown in Figure 5, the search system 100 determines, for each record 400 in the product-searching database 212, how much a price for that product 108 has changed since the last update performed by the search system 100. In particular, in this embodiment, price drops are searched for, but it will be appreciated that price increases could also be searched for in an analogous manner.

The searching may be done in a variety of ways, for example, by calculating a percentage change according to the formula:

$$percentage\_change = 100 \times \frac{last\_min\_totalprice - min\_totalprice}{last\_min\_totalprice}$$

Alternatively, if the price differential provided by the user 104 is simply an absolute value, then the price change determined is *last_min_totalprice - min_totalprice.*

It will, of course, be appreciated that these calculations could be performed during the update process performed by the search system 100, with the changes determined being stored in the corresponding records 400.

If the determined price change for a record 400 exceeds the price differential received from the user 104 at the price differential input 702, then the offer corresponding to the *lowest_offer_id* in that record 400 is identified by the search system 100 as satisfying the filter condition. Alternatively, the search system 100 may determine that all of the offers relating to the product 108 of that record 400 satisfy the filter condition.

In an embodiment of the invention, the search system 100 may disregard an offer that has been identified as above if the corresponding price differential exceeds a threshold amount, for example a threshold percentage change. This may be used to detect and ignore errors in the data. For example, a drop in price of 90% or more may indicate that the information being stored in the product-searching database 212 may be incorrect.

It will be appreciated that the records 400 may contain fields storing other price information for the corresponding product 108 that allow other price changes to be determined and tested. The use of the *last_min_totalprice* and *min_totalprice* fields as described above allows the price change between the current date and the date of the preceding update process to be determined. In this embodiment, this is a price change over a one day period. However, other fields storing price information at other points in time could be used, for example, to determine a price change over a three week period (or any other appropriate time period).

The interface 700 also has a category input 704 which operates in the same manner as the category input 604 of the interface 600. The interface 700 also has a seller-count input 706 which operates in the same manner as the seller-count input 608 of the interface 600.

The interface 700 also has an ordering input 708 which operates in the same manner as the ordering input 610 of the interface 600. In Figure 7, the ordering input 708 is set to order the results of the search according to the calculated percentage change for the price of the product 108 for the offers that have been identified by the search.

**4 - Filtering based on price comparison**

In one embodiment of the invention, one of the filter metrics used defines a price differential value. An offer satisfies the filter condition corresponding to this filter metric if the difference between the lowest price for the corresponding product 108 and the next lowest price for that product 108 exceeds the differential value.

Figure 8 is an illustration of an interface 800 provided to a user 104 according to this embodiment. The interface 800 provides the user 104 with a price differential input 802. In the example shown in Figure 8, the user 104 supplies a percentage to specify the price differential making up the filter metric. However, it will be appreciated that in other embodiments of the invention, the interface 800 may provide a price differential input 802 that receives an absolute value for the price differential making up the filter metric. However, in the current embodiment, as shown in Figure 8, the user 104 is requesting that the search system 100 searches for offers by filtering the offers to find only products 108 for which the corresponding lowest price is at least 25% less than the second lowest price for that product 108.

In order to perform this filtering, at the step S502 shown in Figure 5, the search system 100 determines for each record 400 in the product-searching database 212, how much the lowest price for the corresponding product 108 differs from the next lowest price for that product 108. This may be done in a variety of ways, for example, by determining a percentage difference according to the formula:

$$percentage\_diff = 100 \times \frac{next\_lowest\_totalprice - min\_totalprice}{min\_totalprice}$$

Alternatively, if the price differential provided by the user 104 is simply an absolute value, then the difference is determined according to the formula *next_lowest_totalprice - min_totalprice.*

It will, of course, be appreciated that this calculation could be performed during the update process performed by the search system 100, with the differences determined being stored in the corresponding records 400.

If this calculated difference for a record 400 exceeds the price differential received from the user 104 at the price differential input 802, then the offer corresponding to the *lowest_offer_id* in that record 400 is identified as satisfying the filter condition.

Alternatively, or additionally, another one of the filter metrics used defines a price differential value. An offer satisfies the filter condition corresponding to this filter metric if the difference between the lowest price for the corresponding product 108 and an average price for that product 108 exceeds the differential value.

The interface 800 provides the user 104 with a second price differential input 804. In the example shown in Figure 8, the user 104 supplies a percentage to specify the price differential making up the filter metric. However, it will be appreciated that in other embodiments of the invention, the interface 800 may provide a price differential input 804 that receives an absolute value for the price differential making up the filter metric.

In order to perform this filtering, at the step S502 shown in Figure 5, the search system 100 determines, for each record 400 in the product-searching database 212, how much the lowest price for the corresponding product 108 differs from the average price for that product 108. This may be done in a variety of ways, for example, by determining a percentage difference according to the formula:

$$percentage\_diff = 100 \times \frac{average\_totalprice - min\_totalprice}{min\_totalprice}$$

Alternatively, if the price differential provided by the user is simply an absolute value, then the difference is determined accroding to the formula *average_totalprice - min_totalprice.*

It will, of course, be appreciated that this calculation could be performed during the update process performed by the search system 100, with the differences determined being stored in the corresponding records 400.

If this calculated difference for a record 400 exceeds the price differential received from the user 104 at the second price differential input 804, then the offer corresponding to the *lowest_offer_id* in that record 400 is identified as satisfying the filter condition.

The interface 800 also has a category input 806 which operates in the same manner as the category input 604 of the interface 600. The interface 800 also has a seller-count input 808 which operates in the same manner as the seller-count input 608 of the interface 600.

The interface 800 also has an ordering input 808 which operates in the same manner as the ordering input 610 of the interface 600. In Figure 8, the ordering input 800 is set to order the results of the search according to the percentage difference between the lowest price and the second lowest price for the corresponding product 108.

**5 - Filtering based on user access**

In one embodiment of the invention, one of the filter metrics used defines a user access differential value. An offer for a product 108 satisfies the filter condition corresponding to this filter metric if (i) that offer has the most accessed offer web-page out of the offer web-pages for that product 108 and (ii) the difference between the number of user accesses to that offer's offer web-page and the number of user accesses to the next most accessed offer web-page for the same product 108 exceeds the user access differential value.

Figure 9 is an illustration of an interface 900 provided to a user 104 according to this embodiment. The interface 900 provides the user 104 with a user access differential input 902. In the example shown in Figure 9, the user 104 supplies a percentage to specify the user access differential making up the filter metric. However, it will be appreciated that in other embodiments of the invention, the interface 900 may provide a user access differential input 902 that receives an absolute value for the user access differential making up the filter metric. However, in the current embodiment, as shown in Figure 9, the user 104 is requesting that the search system 100 searches for offers by filtering the offers to find only products 108 for which the corresponding most accessed offer web-page has at least 20% more user accesses than the next most accessed offer web-page for that product 108.

In order to perform this filtering, at the step S502 shown in Figure 5, the search system 100 determines, for each record 400 in the product-searching database 212, how much more popular (or accessed) the most accessed offer web-page for the corresponding product 108 is over the next most accessed offer web-page for that product 108. This may be done in a variety of ways, for example, by determining a percentage difference according to the formula:

$$percentage\_diff = 100 \times \frac{highest\_access\_amount - next\_highest\_access\_amount}{next\_highest\_access\_amount}$$

Alternatively, if the user access differential provided by the user 104 is simply an absolute value, then the difference is determined according to the formula *highest_access_amount - next_highest_access_amount.*

It will, of course, be appreciated that this calculation could be performed during the update process performed by the search system 100, or even dynamically as users 104 access the various offers web-pages, with the differences determined being stored in the corresponding records 400.

If this calculated difference for a record 400 exceeds the user access differential received from the user 104 at the user access differential input 902, then the offer corresponding to the *most_accessed_offer_id* in that record 400 is identified as satisfying the filter condition.

The interface 900 also has a category input 904 which operates in the same manner as the category input 604 of the interface 600. The interface 900 also has a seller-count input 906 which operates in the same manner as the seller-count input 608 of the interface 600.

The interface 900 also has an ordering input 908 which operates in the same manner as the ordering input 610 of the interface 600. In Figure 9, the ordering input 900 is set to order the results of the search according to the percentage difference between the highest number of user accesses and the next highest number of user accesses for offer web-pages for a product 108.

It will be appreciated that, instead of (or in addition to) using the *next_highest_access_amount* field in the above process, the embodiment may use the *average_access_amount* field.

It will be appreciated that other filter metrics used may be based on user access. For example, the user 104 could specify a filter metric identifying a period of time together with a user access differential, such that the corresponding filter condition is satisfied by an offer if the number of user accesses to that offer's offer web-page on the current date exceeds, by at least the user access differential specified, the average number of user accesses to that offer's offer web-page over the period of time indicated by the used.

In order to perform this filtering, at the step S502 shown in Figure 5, the search system 100 determines, for each offer 300 in the product-searching database 212, the average number of user accesses to the corresponding offer web-page during the period of time indicated by the user. For example, if the user indicates a length of time of m days, then this average value would be determined according to $av[m] = \frac{1}{m}\sum_{i=1}^{m} day\_access[i]$. The difference between *av[m]* and *day_access[0]* is the compared to then user access differential provided by the user. This may be done in an analogous manner to the comparisons that have been described above (depending on whether a percentage or absolute value is specified for the user access differential).

If this calculated difference for a record 300 exceeds the user access differential received from the user 104, then the offer corresponding to that record 300 is identified as satisfying the filter condition.

It will be appreciated that the user 104 may only be interested in offers or products 104 that are current and that are not out-of-date. Therefore, in embodiments of the invention, the search system may restrict its searching to those records 300 in the offer-searching database 110 and those records 400 in the product-searching database 112 that have a *lsd* field with the current date.

It will be appreciated that the search system 100 may provide default values for one or more of the filter metrics that are used.

It will be appreciated that date/time information may be stored in the various databases as date information, time information and/or date/time information. This may depend on how frequently the search system 100 performs its update process.

It will be appreciated that any other form of network other than, or in addition to, the Internet 102 may be used in place of the Internet 102, provided that this network can receive offers from the sellers 106 and received data from and transmit data to the users 104. Indeed, the search system 100 may be an internal tool used by an organisation and may not be publicly available to users 104 outside of that organisation.

In an embodiment of the invention, the search system 100 is arranged to notify a user 104 about offers that satisfy one or more filter conditions corresponding to one or more filter metrics provided by the user 104. The search system 100 may be arranged to perform, for example on a daily basis, its own searching to identify any offers which satisfy the filter conditions defined by the user 104 and which therefore need to be notified to that user 104. For example, this could be performed as part of the updating process which the search system 100 performs. The notification could be performed in a variety of ways, such as by an email or an SMS message.

In so far as embodiments of the invention are implemented, as least in part, by a computer program, it will be appreciated that the computer program and any storage or transmission medium carrying the computer program are envisaged as aspects of the invention.

## Claims

1. A method of searching a data store, the data store storing a plurality of offers, each offer comprising information about a corresponding product and a corresponding seller for that offer, the method comprising the steps of:

   receiving, from each of a plurality of sellers, one or more offers;
   storing the offers received from the plurality of sellers in the data store; and
   filtering the stored offers by:

   receiving one or more filter metrics, each filter metric defining a corresponding filter; and
   identifying one or more of the stored offers that satisfy each filter condition.

2. A method according to claim 1 in which the one or more filter metrics are provided by a user.

3. A method according to claim 2, in which the filter metrics provided by the user are such that the user considers an offer that satisfies each corresponding filter condition as preferable to an offer that does not satisfy each corresponding filter condition.

4. A method according to any one of the preceding claims, in which one of the filter metrics comprises an indication of a period of time, such that the filter condition corresponding to that filter metric is satisfied by an offer if the offer was first received after the beginning of the period of time indicated;
   the step of identifying comprising the step of:

   determining whether an offer was first received after the beginning of the period of time indicated.

5. A method according to claim 4, comprising the step of:

   storing, for each offer, the date and/or time at which that offer was first received.

6. A method according to any one of the preceding claims, in which one of the filter metrics comprises an indication of a period of time, such that the filter condition corresponding to that filter metric is satisfied by a given offer if the first offer received for the product corresponding to that given offer was received after the beginning of the period of time indicated;

the step of identifying comprising the step of:

determining whether the first offer for that product was received after the beginning of the period of time indicated.

7. A method according to claim 5, comprising the step of:

storing, for each product, the date and/or time at which the first offer for that product was received.

8. A method according to any one of claims 4 to 7, in which the indication of the period of time comprises a length of time, the beginning of the period of time being the date occurring that length of time before the current date.

9. A method according to any one of claims 4 to 7, in which the indication of the period of time comprises a date, the beginning of the period of time being that date.

10. A method according to any one of the preceding claims, in which the information of an offer comprises an indication of a price at which the seller for that offer is selling the product of that offer.

11. A method according to claim 10, in which one of the filter metrics comprises an indication of a first price differential, and in which the step of identifying comprises the steps of:

determining, for a product, a lowest offer, the lowest offer being the offer, out of all of the offers for that product, with the lowest price;
determining, for that product, a next lowest offer, the next lowest offer being the offer, out of all of the offers for that product, with the second lowest price; and
identifying that the lowest offer for a product satisfies the filter condition corresponding to that filter metric if the difference between the price of that lowest offer and the price of the next lowest offer for that product exceeds the first price differential.

12. A method according to claim 10 or 11, in which one of the filter metrics comprises an indication of a second price differential, and in which the step of identifying comprises the steps of:

determining, for a product, a lowest offer, the lowest offer being the offer, out of all of the offers for that product, with the lowest price;
determining an average price from the prices of the offers for that product; and
identifying that the lowest offer satisfies the filter condition corresponding to that filter metric if the difference between the price of the lowest offer and the average price exceeds the second price differential.

13. A method according to claim 12, in which the average price is determined from the prices of all of the offers for that product.

14. A method according to claim 12, in which the average price is determined from the prices of all of the offers for that product excluding the lowest offer.

15. A method according to any one of claims 10 to 14, in which one of the filter metrics comprises an indication of a third price differential, and in which the step of identifying comprises the steps of:

determining, for a product, a lowest offer, the lowest offer being the offer, out of all of the offers for that product, with the lowest price;
determining, for that product, a previous lowest offer, the previous lowest offer being the offer, out of all of the offers at a preceding point in time for that product, with the lowest price; and
identifying that an offer for that product satisfies the filter condition corresponding to the filter metric if the difference between the price of the lowest offer and the price of the previous lowest offer exceeds the third price differential.

16. A method according to claim 15, in which the preceding point in time is in the previous day.

**17.** A method according to claim 15 or 16, comprising the step of:

> disregarding an offer if the difference between the price of the lowest offer and the price of the previous lowest offer exceeds a threshold difference.

**18.** A method according to any one of claims 11 to 17, in which a price differential is indicated as a percentage.

**19.** A method according to any one of claims 11 to 17, in which a price differential is indicated as an absolute quantity.

**20.** A method according to any one of the preceding claims, comprising the steps of:

> providing, for each offer, access to a user-accessible web-page; and
> maintaining, for each offer, an access indicator indicating the number of times the user-accessible web-page for that offer has been accessed by a user.

**21.** A method according to claim 20, in which one of the filter metrics comprises an indication of a first user access differential, and in which the step of identifying comprises the steps of:

> determining, for a product, a most-accessed offer, the most-accessed offer being the offer out of all of the offers for that product with the highest access indicator;
> determining, for that product, a next-most-accessed offer, the next-most-accessed offer being the offer out of all of the offers for that product with the second highest access indicator; and
> identifying that the most-accessed offer for a product satisfies the filter condition corresponding to that filter metric if the difference between the access indicator for the most-accessed offer and the access indicator for the next-most-accessed offer for that product exceeds the first user access differential.

**22.** A method according to claim 20 or 21, in which one of the filter metrics comprises an indication of a second user access differential, and in which the step of identifying comprises the steps of:

> determining, for a product, a most-accessed offer, the most-accessed offer being the offer out of all of the offers for that product with the highest access indicator;
> determining an average access indicator from the access indicators of offers for that product; and
> identifying that the most-accessed offer satisfies the filter condition corresponding to that filter metric if the difference between the access indicator of the most-accessed offer and the average access indicator exceeds the second access differential.

**23.** A method according to claim 22, in which the average access indicator is determined from the access indicators of all of the offers for that product.

**24.** A method according to claim 22, in which the average access indicator is determined from the access indicators of all of the offers for that product excluding the most-accessed offer.

**25.** A method according to any one of claims 20 to 24, in which the access indicator for an offer is time-based, in which one of the filter metrics comprises an indication of a third user access differential and a period of time, and in which the step of identifying comprises the steps of:

> determining, for an offer, an average access indicator over the period of time indicated; and
> identifying that an offer satisfies the filter condition corresponding to that filter metric if the difference between a current access indicator for that offer and the average access indicator for that offer exceeds the user third access differential.

**26.** A method according to any one of claims 20 to 25, in which the access indicator for an offer is the number of times a user has accessed a link to the user-accessible web-page for that offer.

**27.** A method according to any one of claims 20 to 26, comprising the steps of:

> for an offer, recording, for each of a plurality of periods of time, a corresponding period count, each period count being the number of times the user-accessible web-page for that offer has been accessed by a user over the corresponding period of time; and
determining the access indicator for that offer as a weighted sum of the period counts.

28. A method according to any one of claims 21 to 27, in which a user access differential is indicated as a percentage.

29. A method according to any one of claims 21 to 27, in which a user access differential is indicated as an absolute quantity.

30. A method according to any one of claims 4 to 29, in which one of the filter metrics comprises an indication of a category of product, such that the filter condition corresponding to that filter metric is satisfied by an offer if that offer is for a product belonging to the category indicated;
the step of identifying comprising comparing, for an offer, a category to which the product for that offer belongs with the category.

31. A method according to any one of claims 4 to 32, in which one of the filter metrics comprises an indication of a seller, such that the filter condition corresponding to that filter metric is satisfied by an offer if the seller for that offer matches the seller indicated;
the step of identifying comprising comparing, for an offer, the seller for that offer with the seller indicated..

32. A method according to any one of the preceding claims, comprising the step of:

presenting the identified offers to a user.

33. A method according to claim 32, in which the identified offers are presented in an order dependent upon the degree to which each identified offer satisfies one of the filter conditions.

34. A method according to any one of the preceding claims, comprising the steps of:

notifying a user of an offer that has been identified at the step of identifying.

35. A method according to claim 34 in which the user if notified by an SMS message and/or an email message.

36. A method for identifying to a user one or more offers, each offer having been received from one of a plurality of sellers and having information about a product being sold by that seller, the method comprising specifying one or more filter conditions and filtering the received offers according to the filter conditions to identify one or more of the received offers.

37. A searching apparatus comprising:

means for receiving, from each of a plurality of sellers, one or more offers, each offer comprising information about a corresponding product and a corresponding seller for that offer;
a data store for storing the offers received from the plurality of sellers; and
means for filtering the stored offers by receiving one or more filter metrics, each filter metric defining a corresponding filter condition, and identifying one or more of the stored offers that satisfy each filter condition.

38. An apparatus for identifying to a user one or more offers, each offer having been received from one of a plurality of sellers and having information about a product being sold by that seller, the apparatus having means to specifying one or more filter conditions and means to filter the received offers according to the filter conditions to identify one or more of the received offers.

39. A computer program which, when executed by a computer, carries out a method according to any one of claims 1 to 36.

40. A storage medium carrying a computer program according to claim 39.

41. A transmission medium carrying a computer program according to claim 39.

**Amended claims in accordance with Rule 86(2) EPC.**

**1.** A method of searching a data store, the data store storing a plurality of offers, each offer comprising information about a corresponding product and a corresponding seller for that offer, the method comprising the steps of:

receiving, from each of a plurality of sellers, one or more offers;
storing the offers received from the plurality of sellers in the data store; and
filtering the stored offers by:

receiving one or more filter metrics, each filter metric defining a corresponding filter condition; and
identifying one or more of the stored offers that satisfy each filter condition;
the method further comprising the steps of:

providing, for each offer, access to a user-accessible web-page; and
maintaining, for each offer, an access indicator indicating the number of times the user-accessible web-page for that offer has been accessed by a user;

wherein a first one of the filter metrics comprises an indication of a first user access differential, and wherein the step of identifying comprises the steps of:

determining, for a product, a most-accessed offer, the most-accessed offer being the offer out of all of the offers for that product with the highest access indicator;
determining, for that product, a next-most-accessed offer, the next-most-accessed offer being the offer out of all of the offers for that product with the second highest access indicator; and
identifying that the most-accessed offer for a product satisfies the filter condition corresponding to the first filter metric if the difference between the access indicator for the most-accessed offer and the access indicator for the next-most-accessed offer for that product exceeds the first user access differential.

**2.** A method according to claim 1, in which one of the filter metrics comprises an indication of a second user access differential, and in which the step of identifying comprises the steps of:

determining, for a product, a most-accessed offer, the most-accessed offer being the offer out of all of the offers for that product with the highest access indicator;
determining an average access indicator from the access indicators of offers for that product; and
identifying that the most-accessed offer satisfies the filter condition corresponding to that filter metric if the difference between the access indicator of the most-accessed offer and the average access indicator exceeds the second access differential.

**3.** A method according to claim 2, in which the average access indicator is determined from the access indicators of all of the offers for that product.

**4.** A method according to claim 2, in which the average access indicator is determined from the access indicators of all of the offers for that product excluding the most-accessed offer.

**5.** A method according to any one of claims 1 to 4, in which the access indicator for an offer is time-based, in which one of the filter metrics comprises an indication of a third user access differential and a period of time, and in which the step of identifying comprises the steps of:

determining, for an offer, an average access indicator over the period of time indicated; and
identifying that an offer satisfies the filter condition corresponding to that filter metric if the difference between a current access indicator for that offer and the average access indicator for that offer exceeds the user third access differential.

**6.** A method according to any one of claims 1 to 5, in which the access indicator for an offer is the number of times a user has accessed a link to the user-accessible web-page for that offer.

**7.** A method according to any one of claims 1 to 6, comprising the steps of:

for an offer, recording, for each of a plurality of periods of time, a corresponding period count, each period count being the number of times the user-accessible web-page for that offer has been accessed by a user over the corresponding period of time; and

determining the access indicator for that offer as a weighted sum of the period counts.

**8.** A method according to any one of claims 1 to 7, in which a user access differential is indicated as a percentage.

**9.** A method according to any one of claims 1 to 7, in which a user access differential is indicated as an absolute quantity.

**10.** A method according to any one of claims 1 to 9, in which the one or more filter metrics are provided by a user.

**11.** A method according to claim 10, in which the filter metrics provided by the user are such that the user considers an offer that satisfies each corresponding filter condition as preferable to an offer that does not satisfy each corresponding filter condition.

**12.** A method according to any one of the preceding claims, in which one of the filter metrics comprises an indication of a period of time, such that the filter condition corresponding to that filter metric is satisfied by an offer if the offer was first received after the beginning of the period of time indicated;

the step of identifying comprising the step of:

determining whether an offer was first received after the beginning of the period of time indicated.

**13.** A method according to claim 12, comprising the step of:

storing, for each offer, the date and/or time at which that offer was first received.

**14.** A method according to any one of the preceding claims, in which one of the filter metrics comprises an indication of a period of time, such that the filter condition corresponding to that filter metric is satisfied by a given offer if the first offer received for the product corresponding to that given offer was received after the beginning of the period of time indicated;

the step of identifying comprising the step of:

determining whether the first offer for that product was received after the beginning of the period of time indicated.

**15.** A method according to claim 13, comprising the step of:

storing, for each product, the date and/or time at which the first offer for that product was received.

**16.** A method according to any one of claims 12 to 15, in which the indication of the period of time comprises a length of time, the beginning of the period of time being the date occurring that length of time before the current date.

**17.** A method according to any one of claims 12 to 15, in which the indication of the period of time comprises a date, the beginning of the period of time being that date.

**18.** A method according to any one of the preceding claims, in which the information of an offer comprises an indication of a price at which the seller for that offer is selling the product of that offer.

**19.** A method according to claim 18, in which one of the filter metrics comprises an indication of a first price differential, and in which the step of identifying comprises the steps of:

determining, for a product, a lowest offer, the lowest offer being the offer, out of all of the offers for that product, with the lowest price;

determining, for that product, a next lowest offer, the next lowest offer being the offer, out of all of the offers for that product, with the second lowest price; and

identifying that the lowest offer for a product satisfies the filter condition corresponding to that filter metric if the difference between the price of that lowest offer and the price of the next lowest offer for that product exceeds the first price differential.

**20.** A method according to claim 18 or 19, in which one of the filter metrics comprises an indication of a second price differential, and in which the step of identifying comprises the steps of:

determining, for a product, a lowest offer, the lowest offer being the offer, out of all of the offers for that product, with the lowest price;
determining an average price from the prices of the offers for that product; and
identifying that the lowest offer satisfies the filter condition corresponding to that filter metric if the difference between the price of the lowest offer and the average price exceeds the second price differential.

**21.** A method according to claim 20, in which the average price is determined from the prices of all of the offers for that product.

**22.** A method according to claim 20, in which the average price is determined from the prices of all of the offers for that product excluding the lowest offer.

**23.** A method according to any one of claims 18 to 22, in which one of the filter metrics comprises an indication of a third price differential, and in which the step of identifying comprises the steps of:

determining, for a product, a lowest offer, the lowest offer being the offer, out of all of the offers for that product, with the lowest price;
determining, for that product, a previous lowest offer, the previous lowest offer being the offer, out of all of the offers at a preceding point in time for that product, with the lowest price; and
identifying that an offer for that product satisfies the filter condition corresponding to the filter metric if the difference between the price of the lowest offer and the price of the previous lowest offer exceeds the third price differential.

**24.** A method according to claim 23, in which the preceding point in time is in the previous day.

**25.** A method according to claim 23 or 24, comprising the step of:

disregarding an offer if the difference between the price of the lowest offer and the price of the previous lowest offer exceeds a threshold difference.

**26.** A method according to any one of claims 19 to 25, in which a price differential is indicated as a percentage.

**27.** A method according to any one of claims 19 to 25, in which a price differential is indicated as an absolute quantity.

**28.** A method according to any one of claims 12 to 27, in which one of the filter metrics comprises an indication of a category of product, such that the filter condition corresponding to that filter metric is satisfied by an offer if that offer is for a product belonging to the category indicated;
the step of identifying comprising comparing, for an offer, a category to which the product for that offer belongs with the category.

**29.** A method according to any one of claims 12 to 28, in which one of the filter metrics comprises an indication of a seller, such that the filter condition corresponding to that filter metric is satisfied by an offer if the seller for that offer matches the seller indicated;
the step of identifying comprising comparing, for an offer, the seller for that offer with the seller indicated..

**30.** A method according to any one of the preceding claims, comprising the step of:

presenting the identified offers to a user.

**31.** A method according to claim 30, in which the identified offers are presented in an order dependent upon the degree to which each identified offer satisfies one of the filter conditions.

**32.** A method according to any one of the preceding claims, comprising the steps of:

notifying a user of an offer that has been identified at the step of identifying.

**33.** A method according to claim 32 in which the user if notified by an SMS message and/or an email message.

**34.** A searching apparatus comprising:

means for receiving, from each of a plurality of sellers, one or more offers, each offer comprising information about a corresponding product and a corresponding seller for that offer;
a data store for storing the offers received from the plurality of sellers;
means for filtering the stored offers by receiving one or more filter metrics, each filter metric defining a corresponding filter condition, and identifying one or more of the stored offers that satisfy each filter condition;
means for providing, for each offer, access to a user-accessible web-page; and
means for maintaining, for each offer, an access indicator indicating the number of times the user-accessible web-page for that offer has been accessed by a user;

wherein a first one of the filter metrics comprises an indication of a first user access differential, and wherein identifying one or more of the stored offers that satisfy each filter condition comprises the steps of:

determining, for a product, a most-accessed offer, the most-accessed offer being the offer out of all of the offers for that product with the highest access indicator;
determining, for that product, a next-most-accessed offer, the next-most-accessed offer being the offer out of all of the offers for that product with the second highest access indicator; and
identifying that the most-accessed offer for a product satisfies the filter condition corresponding to the first filter metric if the difference between the access indicator for the most-accessed offer and the access indicator for the next-most-accessed offer for that product exceeds the first user access differential.

**35.** A computer program which, when executed by a computer, carries out a method according to any one of claims 1 to 33.

**36.** A storage medium carrying a computer program according to claim 35.

**37.** A transmission medium carrying a computer program according to claim 35.

Figure 1

Figure 2

300 ~

```
- offer_id
- cat_id
- seller_id
- fsd
- lsd
```

Figure 3

400 ~

```
- title
- product_id
- cat_id
- min_totalprice
- last_min_totalprice
- avg_totalprice
- next_lowest_totalprice
- number_sellers
- fsd
- lsd
- lowest_offer_id
- seller_id
```

Figure 4

S500 ⌇ 

| Receive values for filter metrics from user |
|---|

S502 ⌇

| Identify offers that satisfy each filter conditions defined by the filter metrics |
|---|

S504 ⌇

| Return results to the user |
|---|

Figure 5

**FIG. 6**

| | | |
|---|---|---|
| **No older than** | 3 | days | ～602 |
| Cat: | All | ▽ | ～604 |
| comid | | | ～606 |
| At least | 3 | merchants | ～608 |
| Order by | Newest first | ▽ | ～610 |

600

**FIG. 7**

| | |
|---|---|
| **% drop of at least** | 15 | ～702 |
| Cat: | All | ▽ | ～704 |
| At least | 3 | merchants | ～706 |
| Order by | % Drop | ▽ | ～708 |

700

**FIG. 8**

| | |
|---|---|
| **At least % less than second cheapest** | 25 | ～802 |
| At least % less than average price | | ～804 |
| Cat: | All | ▽ | ～806 |
| At least | 3 | merchants | ～808 |
| Order by | % Cheaper than 2nd | ▽ | ～810 |

800

**FIG. 9**

| | |
|---|---|
| **At least % more access than second most accessed** | 20 | ～902 |
| Cat: | All | ▽ | ～904 |
| At least | 3 | merchants | ～906 |
| Order by | % More than second | ▽ | ～908 |

900

**European Patent Office**

**DECLARATION**

which under Rule 45 of the European Patent Convention shall be considered, for the purposes of subsequent proceedings, as the European search report

Application Number

EP 06 25 2173

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.<br>The problems which are addressed do not appear to require a technical, but rather an administrative/organisational, or business, solution. The implementation of this solution may include the use of generic technical features, however these do not interact to solve any overall technical problem but merely serve their well-known functions.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>----- | INV.<br>G06Q30/00<br>G06F17/30 |

| Place of search | Date | Examiner |
|---|---|---|
| Munich | 5 September 2006 | Heselius, P |

EPO FORM 1504 (P04C37)